(19) Europäisches Patentamt
European Patent Office
Office européen des brevets

(11) EP 1 672 022 A1

(12) **EUROPEAN PATENT APPLICATION**
published in accordance with Art. 158(3) EPC

(43) Date of publication:
**21.06.2006 Bulletin 2006/25**

(21) Application number: **04792106.9**

(22) Date of filing: **06.10.2004**

(51) Int Cl.:
***C08L 23/16*** *(1985.01)* ***C08K 13/02*** *(1990.01)*
***C08J 5/18*** *(1974.07)* ***B32B 25/08*** *(1968.09)*

(86) International application number:
**PCT/JP2004/014750**

(87) International publication number:
**WO 2005/035649 (21.04.2005 Gazette 2005/16)**

(84) Designated Contracting States:
**DE FR GB**

(30) Priority: **09.10.2003 JP 2003351315**

(71) Applicant: **JSR Corporation**
**Tokyo 104-8410 (JP)**

(72) Inventors:
- **SUZUKI, Masanori,**
**c/o JSR Corporation**
**Tokyo 104-8410 (JP)**
- **KAWATA, Takashi,**
**c/o JSR Corporation**
**Tokyo 104-8410 (JP)**
- **MIZOUCHI, Hiroyuki,**
**c/o JSR Corporation**
**Tokyo 104-8410 (JP)**
- **MORIKAWA, Akihiko,**
**c/o JSR Corporation**
**Tokyo 104-8410 (JP)**

(74) Representative: **TBK-Patent**
**Bavariaring 4-6**
**80336 München (DE)**

# (54) ELASTOMER FILMS AND PROCESS FOR PRODUCTION THEREOF

(57) The present invention provides an elastomer film which is excellent in transparency, mechanical strength, heat resistance and colorability and a producing method thereof. An elastomer material was obtained by kneading a polar-group modified olefin-based copolymer comprising derived from each monomer of ethylene, propylene and 8-methyl-8-carboxy-tetracyclo[4.4.0.$1^{2,5}$.$1^{7,10}$]-3-dodecene and tetra n-butoxyzirconium as a metal compound, granulating and palletizing. Then, an obtained pellet was subjected to press-molding to produce an elastomer film of the present invention, having an elastomer layer in which the above-mentioned polar group-modified olefin-based copolymer was crosslinked with a metal compound due to electrical interaction through a polar group in the above-mentioned polar group-modified olefin-based copolymer.

EP 1 672 022 A1

## Description

[Technical Field]

The present invention relates to an elastomer film and a producing method thereof. More particularly, it relates to an elastomer film which is excellent in transparency, mechanical strength, heat resistance and colorability and a producing method thereof.

[Background Art]

Since it is necessary to use a thin and alkali-free glass for a base layer such as a glass plate constituting a flat display panel represented by a liquid crystal panel, it is known that the base layer shows poor viscoelasticity, thus it is easy to be broken by pressing down or collision. Accordingly, in the case a flat display panel is used for a portable device and the like, a transparent resin layer made of polycarbonate or acrylic was used conventionally in order to protect the panel. In addition, referring to the protection of a display panel, in the following Patent Documents 1 and 2, a protective sheet for display panel in which a tackiness agent or the like is applied to one surface of a resin film, and which is attached on the surface of a display panel is disclosed.

On the other hand, there have been known so far an olefin-based thermoplastic elastomer as an elastomer constituting an elastomer film. As such an olefin-based thermoplastic elastomer, there have been known a thermoplastic elastomer prepared by mixing an olefin-based resin and an olefin-based copolymer rubber, a thermoplastic elastomer prepared by partially crosslinking an olefin-based resin and an olefin-based copolymer rubber by a crosslinking agent, and the like. For example, Patent Document 3 discloses an olefin-based thermoplastic elastomer which is characterized in comprising an olefin-based random copolymer prepared by copolymerizing ethylene, an $\alpha$-olefin of 3 to 10 carbon atoms, an unsaturated monomer having a functional group and optionally, a non-conjugated diene, and a metal ion for crosslinking this olefin-based random copolymer. This olefin-based thermoplastic elastomer has rubber elasticity, flexibility and moldability similar to a conventional olefin-based thermoplastic elastomer, as well as has satisfactory functions and effects in mechanical properties and wears resistance, and particularly has excellent scratch resistance.

In addition, Patent Document 4 described below discloses a flexible composition comprising a specific hydrogenated block copolymer and a liquid additive such as paraffin-based processing oil by a specific ratio. And it is described that such a flexible composition is excellent in flexibility, a low-molecular compound retaining property, a dynamic property, hot melt tackiness and adhesive property, and a liquid retaining property. Further, in Patent Document 5 described below, a polymer having network structure in which a low-molecular material such as paraffin oil is held between three-dimensional continuous network made of a specific thermoplastic block copolymer, and which is used for a cushioning material and the like is disclosed. Moreover, in Patent Document 6 described below, a rubber composition obtained by mixing a polymer having network structure disclosed in Patent Document 5 described below and a rubber material is disclosed. It is disclosed that such a rubber composition is a low elastic rubber composition in which a low molecular material is dispersed homogenously, and bleed of the low molecular material is small while preferably retaining the low molecular material.

[Patent Document 1] JP-A-H4-030120
[Patent Document 2] JP-A-2000-56694
[Patent Document 3] JP-A-2003-82023
[Patent Document 4] JP-A-H9-263678
[Patent Document 5] JP-A-H8-127698
[Patent Document 6] JP-A-H8-127699

[Disclosure of the Invention]

[Problems to be solved by the Invention]

However, the protective sheet for display panel as shown in Patent Document 1 described above is mainly used for protection in a state of package during transportation or protection of a stationary display, and it is not made for protection of a display panel for such as a cellular telephone. In addition, the protective sheet for display panel as shown in Patent Document 2 described above can protect an article from an impact, a scratching and the like, however, descriptions of protection from an impact due to its collision against a floor by dropping, and a load that may be applied when being carried such as a user is seated while the device is in the user's hip pocket or the device is pressed down are not.

Further, in the case of using a transparent resin layer made of polycarbonate or acrylic in order to protect a display panel, even if such a transparent resin layer was provided, when a space was not provided between the transparent resin layer and a base layer of a liquid crystal panel, the base layer was sometimes broken by transferring a deformation of the transparent resin layer by impact and load. In addition, a light reflected between the space and the transparent resin layer, and between the space and the base layer to cause an overlapping of the image. And it became hard to recognize in some cases. With regard to a product for portable use such as a cellular telephone, it is preferred that a display panel is as thin as possible. From that point of view, means capable of making the thickness of a protective plate itself thin without causing damage of a display panel and means capable of losing a space between the display panel and the protective plate have been needed. In light of the circumstances mentioned above, it has been investigated that an impact absorbing layer, which has transparency that can ensure the visibility of the displayed content of a display panel and also can prevent the article from breakage due to pressing down of the base layer, collision and the like is provided. The development of a material that can be utilized as such an impact absorbing layer, namely, a rubber composition that is excellent in transparency and is also excellent in impact resistance and viscoelasticity has been investigated.

However, the fact is that a rubber composition which is excellent in impact resistance and viscoelasticity and can be utilized as an impact absorbing layer does not have sufficient transparency, on the other hand, a rubber composition having transparency is inferior in impact resistance and viscoelasticity. In addition, Patent Documents 4 to 6 described above do not relate to a transparent flexible composition, and moreover, do not make any mention of, with regard to rubber compositions, necessity of achieving all the transparency, impact resistance and viscoelasticity, and means for realizing it. Therefore, conventionally, it was difficult to achieve all transparency, impact resistance and viscoelasticity for a rubber composition. And accompanied by widening use of an elastomer film, being excellent in colorability as an elastomer film is required from the view of fashionability and variable color.

The present invention has been made in view of the above situations, and an object of the present invention is to provide an elastomer film which is excellent in transparency, mechanical strength, heat resistance, impact resistance and colorability and a producing method thereof.

[Means for solving problems]

The present invention is as follows.

[1] An elastomer film characterized in having an elastomer layer consisting of a polar group-modified olefin-based copolymer, and a metal ion and/or a metal compound.

[2] The elastomer film according to [1] above, wherein the polar group contained in the polar group-modified olefin-based copolymer is at least one group selected from the group consisting of carboxyl group and derivatives thereof, hydroxyl group, epoxy group, amino group, alkoxysilyl group, sulfonic acid group and nitrile group.

[3] The elastomer film according to [1] above, wherein the polar group-modified olefin-based copolymer is at least one polymer selected from the group consisting of a polar group-modified ethylene•$\alpha$-olefin-based copolymer and a polar group-modified ethylene•$\alpha$-olefin-non-conjugated diene copolymer.

[4] The elastomer film according to [1] above, wherein the polar group-modified olefin-based copolymer is a copolymer obtained by copolymerizing one type or two or more olefin-based monomers, and one type or two or more unsaturated monomers having a polar group, and wherein the ratio of a unit of the unsaturated monomer having a polar group is from 0.01 to 5 % by mol based on 100 % by mol of monomer units in the polar group-modified olefin-based copolymer.

[5] The elastomer film according to [4] above, wherein the unsaturated monomer having a functional group is a compound represented by the following general formula (1):

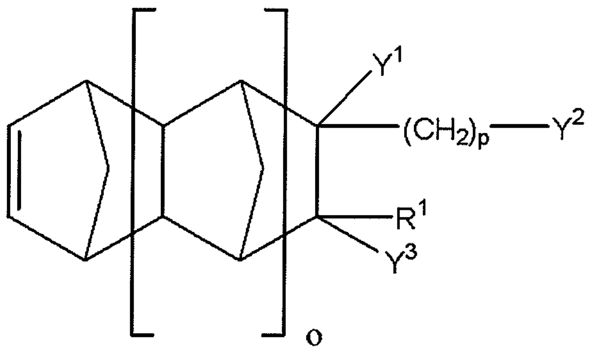

(1)

[in the general formula (1), $R^1$ represents a hydrogen atom or a hydrocarbon group of 1 to 10 carbon atoms; each of $Y^1$, $Y^2$ and $Y^3$ represents independently a hydrogen atom, a hydrocarbon group of 1 to 10 carbon atoms or a carboxyl group; at least one of $Y^1$, $Y^2$ and $Y^3$ is carboxyl group and, in a case where two or more of $Y^1$, $Y^2$ and $Y^3$ are carboxyl groups, they may be an acid anhydride formed by linkage with one another, o represents an integer from 0 to 2 and p represents an integer from 0 to 5.].

[6] The elastomer film according to [1] above, wherein the polar group-modified olefin-based copolymer does not have a crosslinking formed by electron beam irradiation, UV-ray irradiation, and a crosslinking agent.

[7] The elastomer film according to [1] above, wherein at least a portion of the polar group-modified olefin-based copolymer has a crosslinking formed by electron beam irradiation, UV-ray irradiation and a crosslinking agent.

[8] The elastomer film according to [1] above, wherein the metal ion and/or the metal compound is at least one ion and/or compound of a metal selected from the group consisting of zirconium, titanium, aluminum, magnesium, barium, zinc, iron, calcium, potassium, sodium and lead.

[9] The elastomer film according to [1] above, wherein the metal compound is an organic compound comprising a metal element.

[10] The elastomer film according to [1] above, wherein the total transmittance of the elastomer layer is 90% or higher at a temperature of 25°C and at a thickness of 0.5 mm.

[11] The elastomer film according to [1] above, wherein other film layer and/or a hard transparent plate layer is present on at least one surface of the elastomer layer.

[12] A method of producing an elastomer film characterized in comprising: preparing a mixed liquid by dissolving or dispersing a polar group-containing olefin-based copolymer and a metal compound in a solvent, coating the mixed liquid on a substrate, and removing the solvent to form an elastomer layer on the substrate.

[13] The method of producing an elastomer film according to [12] above, comprising applying electron beam irradiation or UV-ray irradiation onto the elastomer layer, or heating the elastomer layer to form crosslinking in at least a portion of the polar group-containing olefin-based copolymer.

[14] A method of producing an elastomer film characterized in forming an elastomer layer by extrusion molding with a liquid comprising a polar group-containing olefin-based copolymer and a metal compound.

[15] The method of producing an elastomer film according to [14] above, comprising disposing the elastomer layer on a substrate.

[16] The method of producing an elastomer film according to [14] above, comprising applying electron beam irradiation or UV-ray irradiation onto the elastomer layer, or heating the elastomer layer to form crosslinking in at least a portion of the polar group-containing olefin-based copolymer.

[Effects of the Invention]

Since the elastomer film of the present invention has the constitution as described above, transparency, impact resistance, heat resistance and colorability are excellent.
Additionally, in case the above-mentioned polar group contained in the polar group-modified olefin-based copolymer described above is at least one group selected from the group consisting of carboxyl group and derivatives thereof, hydroxyl group, epoxy group, amino group, alkoxysilyl group, sulfonic acid group and nitrile group in the elastomer film of the present invention, an elastomer film which is more excellent in transparency, impact resistance, heat resistance and colorability can be obtained.
Further, in case the polar group-modified olefin-based copolymer described above is at least one polymer selected from the group consisting of a polar group-modified ethylene•α-olefin-based copolymer and a polar group-modified ethylene•α-olefin•non-conjugated diene copolymer in the elastomer film of the present invention, an elastomer film which is more

excellent in transparency, impact resistance, heat resistance and colorability can be obtained.
Moreover, in case the polar group-modified olefin-based copolymer described above is a copolymer which is obtained by copolymerizing one type or two or more olefin-based monomers, and one type or two or more unsaturated monomers having a polar group, and wherein the ratio of a unit of the above-mentioned unsaturated monomer having a polar group is in a specific range in the elastomer film of the present invention, an elastomer film which is more excellent in transparency, impact resistance, heat resistance and colorability can be obtained.
Further, in case the above-mentioned unsaturated monomer having a functional group is a compound represented by the general formula (1) described above in the elastomer film of the present invention, an elastomer film which is more excellent in transparency, impact resistance, heat resistance and colorability can be obtained.
In addition, the elastomer film of the present invention has excellent transparency, impact resistance, heat resistance and colorability even if the polar group-modified olefin-based copolymer described above does not have crosslinking formed by electron beam irradiation, UV-ray irradiation and a crosslinking agent, however, in case at least a portion of the polar group-modified olefin-based copolymer described above has a crosslinking formed by electron beam irradiation, UV-ray irradiation and a crosslinking agent, an elastomer film which is more excellent in heat resistance can be obtained.
Further, in case the above-mentioned metal ion and/or the metal compound is specific ion and/or compound described above in the elastomer film of the present invention, an elastomer film which is more excellent in transparency, impact resistance, heat resistance and colorability can be obtained. Particularly, in the case of using an organic compound comprising a metal element as the metal compound described above, the metal compound can be dispersed more easily in the above-mentioned polar group-modified olefin-based copolymer.
Additionally, in case the above-mentioned elastomer layer is an elastomer layer whose total transmittance is 90% or higher at a temperature of 25°C and at a thickness of 0.5 mm in the elastomer film of the present invention, an elastomer film which is more excellent in transparency can be obtained.
Moreover, in case the above-mentioned elastomer film has other film layer and/or a hard transparent plate layer that is present on at least one surface thereof, an elastomer film which is more excellent in transparency, impact resistance, heat resistance and colorability can be obtained. the elastomer layer.

According to the producing method of the elastomer film of the present invention and the other producing method of the elastomer film of the present invention, the elastomer film of the present invention can be obtained easily. In addition, in the case of applying electron beam irradiation or UV-ray irradiation onto the elastomer layer, or heating the elastomer layer, it is possible to form crosslinking in at least a portion of the polar group-containing olefin-based copolymer. As a result, an elastomer film which is more excellent in heat resistance can be obtained.

[Brief Description of Drawings]

[Fig.1] It is a schematic view for explaining the impact resistance test (Test 1) of present examples.
[Fig.2] It is a schematic view for explaining the impact resistance test (Test 2) of present examples.

[Description of reference numerals]

1; elastomer film 2; base layer, 3,4; acrylic plate, 60; iron plate, 61; elastic plate, 62; base platform, 7; golf ball, 8; steel ball.

[Best Mode for Carrying Out the Invention]

Hereunder, the present invention will be explained.
The elastomer film of the present invention has an elastomer layer consisting of a polar group-modified olefin-based copolymer, and a metal ion and/or a metal compound.

(1) Polar group-modified olefin-based copolymer

The polar group-modified olefin-based copolymer described above is an olefin-based copolymer having a polar group in the structure. The type of the polar group is not restrictive, as described later, so long as it has a property of crosslinking by electric interaction (interaction due to electrostatic force, and the like) by a metal ion and/or a metal compound. In addition, the polar group described above may be only one type, or may be two or more types of different polar groups. The polar group specifically includes, for example, one or more of carboxyl groups and derivatives thereof, hydroxyl group, epoxy group, amino group, alkoxysilyl group, sulfonic acid group and nitrile group. The derivative of carboxyl group is a functional group which generates carboxyl group by reaction such as hydrolysis, and includes, for

example, carboxylic acid anhydride group such as maleic acid anhydride group. Additionally, the number of carbon atoms of the alkoxy group contained in the alkoxysilyl group is usually from 1 to 10, preferably from 1 to 8 and further preferably from 1 to 5. The alkoxy group may be linear structure, branched structure or cyclic structure. The alkoxy group includes, specifically, methoxy group, ethoxy group, 1-propoxy group, 2-propoxy group, 1-butoxy group, 2-butoxy group, t-butoxy group and the like. The alkoxy groups may be the same type in all or may be different types of alkyl groups.

The type and the structure of the polar group-modified olefin-based copolymer described above are not particularly limited. The polar group-modified olefin-based copolymer described above may be used alone or in combination of two or more. Specific examples of the polar group-modified olefin-based copolymer described above include a polar group-modified α-olefin-based copolymer, a polar group-modified ethylene-based copolymer and the like. More specifically, a polar group-modified ethylene•α-olefin-based copolymer a polar group-modified ethylene•α-olefin•non-conjugated diene copolymer and the like may be used. The α-olefin mentioned above includes, for example, α-olefins to be described later.

The method for producing of the polar group-modified olefin-based copolymer described above is not particularly limited. Generally, it can be obtained by copolymerizing one or more olefin-based monomers and one or more unsaturated monomers having a polar group by a known method.

The structure and the type of the olefin-based monomer described above are not particularly limited, and various types of olefin-based monomers can optionally be used. As the olefin-based monomer, an olefin of usually 2 to 15, preferably 2 to 10 and further preferably 2 to 8 carbon atoms are used. More specifically, one or, two or more among ethylene, propylene, 1-butene, 1-pentene, 4-methyl-pentene-1, 1-hexene, 1-heptene, 1-octene, 1-decene and the like may be used. In addition, the olefin-based monomer described above may be used alone or in combination of two or more. For example, ethylene, and α-olefin of 3 to 15, preferably 3 to 10 and further preferably 3 to 8 carbon atoms may be used as the olefin-based monomer described above. Specifically, one or, two or more among propylene, 1-butene, 1-pentene, 4-methyl-pentene-1, 1-hexene, 1-heptene, 1-octene, 1-decene and the like may be used as the α-olefin described above.

The amount of the olefin-based monomer to be used is not particularly limited so long as a copolymer can be obtained by copolymerizing with the above-mentioned unsaturated monomer having a polar group, and may be in various ranges depending on a ratio between the amount of the above-mentioned unsaturated monomer having a polar group and the other monomer to be described later, and the like. In addition, in a case of using ethylene and an α-olefin of 3 to 15 carbon atoms in combination as the above-mentioned olefin-based monomer, the amount of ethylene to be used is usually in the range from 35 to 94.99 % by mol, preferably from 40 to 89.99 % by mol and further preferably from 45 to 84.99 % by mol based on the entire monomer ingredients. On the other hand, the amount of the α-olefin-based monomer to be used is usually in the range from 5 to 50 % by mol, preferably from 10 to 45 % by mol and further preferably from 15 to 40 % by mol based on the entire monomer ingredients. If ethylene and α-olefin are used in the amount within the range described above, copolymerization can be performed easily, rubber elasticity necessary as an elastomer can be obtained, and the durability of the obtained elastomer can be improved, being preferable.

The above-mentioned unsaturated monomer having a polar group has no particular restriction for the type and the structure so long as it has the polar group described above and an unsaturated bond and is copolymerizable with the olefin mentioned above. For example, one having carboxyl group, hydroxyl group, epoxy group, amino group, alkoxysilyl group, sulfonic acid group or nitrile group as the polar group mentioned above are preferred, as described above. More specifically, a compound represented by the general formula (1) described above can be used as the unsaturated monomer having a polar group. If the compound is used, since crosslinking with the above-mentioned metal ion and/or the metal compound is good.

In the general formula (1), $R^1$ represents a hydrogen atom, or a hydrocarbon group of 1 to 10, preferably 1 to 8 and further preferably 1 to 6 carbon atoms, each of $Y^1$, $Y^2$ and $Y^3$ represents independently a hydrogen atom, a hydrocarbon group of 1 to 10, preferably 1 to 8 and further preferably 1 to 6 carbon atoms, or a carboxyl group, and at least one of $Y^1$, $Y^2$ and $Y^3$ is carboxyl group. Further, in a case where two or more of $Y^1$, $Y^2$ and $Y^3$ are carboxyl group, they may be an acid anhydride (-CO-(O)-CO-) formed by linkage with one another. The hydrocarbon group of 1 to 10 carbon atoms may be a linear hydrocarbon group or a branched hydrocarbon group. Specific examples include methyl group, ethyl group, propyl group, butyl group, pentyl group, hexyl group, heptyl group, octyl group, nonyl group and decyl group. In addition, recurring number o is an integer number of 0 to 2 and preferably 0 to 1. In case where the recurring number o is 3 or more, it is sometimes difficult to copolymerize the cyclic compound with other monomer. Further, the recurring number p is an integer number of 0 to 5, preferably 0 to 4 and further preferably 0 to 2. The compound represented by the general formula (1) can be produced, for example, by condensing cyclopentadiene and an unsaturated compound having the polar group described above by Diels-Alder reaction, and the like.

Specific examples of the compound represented by the above general formula (1) include 5,6-dimethyl-5,6-dicarboxy-bicyclo[2.2.1]-2-heptene, 5,6-diethyl-5,6-dicarboxy-bicyclo[2.2.1]-2-heptene, 5,6-dimethyl-5,6-bis(carboxymethyl)-bicyclo[2.2.1]-2-heptene, 5,6-diethyl-5,6-bis(carboxymethyl)-bicyclo[2.2.1]-2-heptene, 5-methyl-5-carboxy-bicyclo[2.2.1]-2-heptene, 5-ethyl-5-carboxy-bicyclo[2.2.1]-2-heptene, 5-carboxy-5-carboxymethyl-bicyclo[2.2.1]-2-heptene, 5-methyl-5-carboxymethyl-bicyclo[2.2.1]-2-heptene, 5-ethyl-5-carboxymethyl-bicyclo[2.2.1]-2-heptene, 8,9-dimethyl-8,9-dicarboxy-tetracyclo[4.4.0.$1^{2,5}$.$1^{7,10}$]-3-dodecene, 8,9-diethyl-8,9-dicarboxy-tetracyclo[4.4.0.$1^{2,5}$.$1^{7,10}$]-3-dodecene, 8-methyl-8-carboxy-tetracyclo[4.4.0.$1^{2,5}$.$1^{7,10}$]-3-dodecene, 8-ethyl-8-carboxy-tetracyclo [4.4.0.$1^{2,5}$.$1^{7,10}$]-3-dodecene and the like.

The amount of the above-mentioned unsaturated monomer having a functional group to be used is preferably in the range from 0.01 to 5 % by mol and more preferably from 0.01 to 4 % by mol based on the entire monomer ingredients. When the amount of the above-mentioned unsaturated monomer having a functional group is 0.01 % by mol or more, an elastomer film having higher crosslinking density can be obtained and mechanical strength and heat resistance of the film can be improved, being preferable. On the other hand, when the amount of the above-mentioned unsaturated monomer having a functional group is 5 % by mol or less, a formation of a brittle film having an excessively high hardness because of excessively high crosslinking density can be suppressed, being preferable.

The polar group-modified olefin-based copolymer described above may also comprise one or more structures derived from other monomer in addition to the structure derived from the monomer described above. The structure derived from other monomer can be usually formed by copolymerizing while adding other monomer into the above-mentioned monomer. The above-mentioned other monomer is not particularly restricted for the type and the structure so long as it is copolymerizable with the above-mentioned monomer. Specific examples of the above-mentioned other monomer include a non-conjugated diene. Specific examples of the non-conjugated diene mentioned above include a linear acyclic diene such as 1,4-hexadiene, 1,6-hexadiene and 1,5-hexadiene; a branched acyclic diene such as 5-methyl-1,4-hexadiene, 3,7-dimethyl-1,6-octadiene, 5,7-dimethylocta-1,6-diene, 3,7-dimethyl-1,7-octadiene, 7-methylocta-1,6-diene and dihydromyrcene; a cycloaliphatic diene such as tetrahydroindene, methyl tetrahydroindene, dicyclopentadiene, bicyclo[2,2,1]-hepta-2,5-diene, 5-methylene-2-norbornene, 5-ethylidene-2-norbornene, 5-propenyl-2-norbornene, 5-isopropylidene-2-norbornene, 5-cyclohexylidene-2-norbornene and 5-vinyl-2-norbornene, and the like.

The amount of the above-mentioned other monomer to be used is usually 10 % by mol or less, preferably from 0.001 to 10 % by mol, further preferably from 0.01 to 7 % by mol and particularly from 0.1 to 5 % by mol based on 100 % by mol of the entire monomer ingredients. In particular, when the above-mentioned other monomer is a non-conjugated diene and the amount thereof to be used is within the range described above, the durability of the obtained elastomer can be improved, being preferable.

The polar group-modified olefin-based copolymer mentioned above is not particularly restricted for the type, the material and the structure so long as it has a polar group in the structure, however, a thermoplastic elastomer having a total transmittance at a thickness of 0.5 mm at 25°C of 90% or more, preferably 91% or more, further preferably 92% or more and furthermore preferably 93% or more is suitably used in order to maintain excellent transparency. In addition, the polar group-modified olefin-based copolymer mentioned above preferably has a branched structure from a view point of improving impact resistance. Further, the weight average molecular weight in terms of polystyrene of the polar group-modified olefin-based copolymer mentioned above upon gel permeation chromatography (GPC) is usually in the range from 1,000 to 3,000,000, preferably from 3,000 to 1,000,000 and further preferably from 5,000 to 700,000. When the weight average molecular weight of the polar group-modified olefin-based copolymer mentioned above is within the range described above, an elastomer film having excellent dynamic characteristic can be obtained, being preferable.

The polar group-modified olefin-based copolymer mentioned above is cross-linked by the above-mentioned metal ion and/or the metal compound through the polar group described above, as described later. The polar group-modified olefin-based copolymer mentioned above may be one having no crosslinking other than the crosslinking described above. Further, at least a portion of the polar group-modified olefin-based copolymer mentioned above may form other crosslinking. The method of forming such crosslinking is not particularly restricted and includes, for example, crosslinking by electron beam irradiation, crosslinking by UV-ray irradiation, crosslinking with a crosslinking agent (organic peroxide or the like) and the like.

(2) Metal ion and/or metal compound

The elastomer film of the present invention comprises a metal ion and/or a metal compound that crosslink the polar group-modified olefin-based copolymer mentioned above through the polar group in the polar group-modified olefin-based copolymer mentioned above. Since the elastomer film of the present invention has such a constitution, elasticity, heat resistance and tensile strength of the elastomer film can be improved. Now, crosslinking through the polar group means that the polar group and a metal constituting the above-mentioned metal ion and/or the metal compound are flocculated by electric interaction (interaction due to electrostatic force, and the like). While such crosslinking includes, for example, ionic crosslinking formed between the metal ion and the ion of the polar group mentioned above, the crosslinking need not be this ionic crosslinking so long as the flocculation is caused by electric interaction. This crosslinking is different from crosslinking formed by electron beam irradiation and the like. Since such crosslinking provides an effect of lowering the elasticity along with the temperature elevation as a result of weakening the interaction due to heating. It is to be added that this is estimation based on consumption, and does not restrict the present invention

at all.

Presence or absence of the above-mentioned crosslinking can be examined with a change of viscosities before and after the above-mentioned metal ion and/or the metal compound are incorporated to the polar group-modified olefin-based copolymer mentioned above. Namely, when the viscosity of the polar group-modified olefin-based copolymer mentioned above (it is usually a liquid containing the copolymer) after incorporating the above-mentioned metal ion and/or the metal compound is higher than the viscosity of the polar group-modified olefin-based copolymer mentioned above before incorporating the above-mentioned metal ion and/or the metal compound, a formation of the crosslinking can be confirmed. Specifically, the crosslinking can be confirmed by examining the viscosity ratio (η/ηo) between the viscosity η (mPa•s) of the polar group-modified olefin-based copolymer mentioned above after incorporating the above-mentioned metal ion and/or the metal compound and the viscosity ηo (mPa•s) of the polar group-modified olefin-based copolymer mentioned above before incorporating the above-mentioned metal ion and/or the metal compound with a viscosity measuring apparatus such as RE 115U-type viscometer. The above-mentioned viscosity ratio obtained from η and ηo as measured by the RE 115U-type viscometer at 25°C is usually greater than 1, preferably greater than 1 and 1,000 or less, more preferably greater than 1 and 500 or less, and particularly preferably greater than 1 and 100 or less.

The metal constituting the above-mentioned metal ion and the metal compound is not particularly restricted for the type so long as the metal has a characteristic of crosslinking the polar group-modified olefin-based copolymer mentioned above through the polar group mentioned above. Further, the metal may be used alone, or two or more of them may be used in combination. The preferable metal is one belonging to groups I to VIII of periodic table, and in particular metal in group IA, group IIA, group IIIA and group IVB is more preferable. Specifically, the metal includes at least one of metals selected from zirconium, titanium, potassium, sodium, aluminum, magnesium, calcium, barium, cesium, strontium, rubidium, zinc, copper, iron, tin and lead. Among these, at least one of metals selected from the group consisting of potassium, sodium, zirconium, titanium, aluminum, magnesium, barium, zinc, iron, calcium and lead is preferable. Further, since the crosslinking of the elastomer film of the present invention is due to an electric interaction, and it is not always restricted to ionic crosslinking, the above-mentioned metal is not always restricted to a bivalent metal. In addition, since the crosslinking of the elastomer film of the present invention due to the electric interaction as described above, it is not always necessary that the metal compound mentioned above is present in a state of ion in the elastomer layer.

The metal compound mentioned above may be an inorganic compound comprising a metal element or an organic compound. The organic compound comprising a metal element is more preferred in a case of dissolving in an organic solvent. Examples of the inorganic compound comprising a metal element include a metal oxide, a metal hydroxide, a metal salt and a metal complex. Specifically, they include, for example, a metal oxide such as CuO, MgO, BaO, ZnO, $Al_2O_3$, $Fe_2O_3$, SnO, CaO and $TiO_2$; a metal hydroxide such as LiOH, NaOH, KOH, $Cu(OH)_2$, $Cu_2O(OH)_2$, $Mg(OH)_2$, $Mg_2O(OH)_2$, $Ba(OH)_2$, $Zn(OH)_2$, Sn(OH)2 and $Ca(OH)_2$, and the like. In addition, specific examples of the organic compound comprising a metal element include a metal alkoxide, an alkylalkoxy metal compound (trialkyl alkoxy metal compound such as trimethyl alkoxy metal compound and triethylalkoxy methyl compound; dialkyl alkoxy metal compound such as dimethyl dialkoxy metal compound), a metal carboxylate, a metal acetyl acetonate and the like. The number of the carbon atoms of the alkoxide constituting the metal alkoxide mentioned above is usually from 1 to 8, preferably from 1 to 6 and further preferably from 1 to 4. More specifically, they include, for example, methoxide, ethoxide, propoxide and butoxide. Further, more specific examples of the organic compound comprising a metal element include zirconium butoxide [$Zr(OBu)_4$], titanium butoxide [$Ti(OBu)_4$], aluminum butoxide [$Al(OBu)_4$], zinc butoxide [$Zn(OBu)_4$] and the like.

The content of the above-mentioned metal ion and/or the metal compound is not particularly restricted, and can be optionally in various ranges. The content thereof is usually in the range from 0.1 to 20 parts by mass, preferably from 0.2 to 15 parts by mass and further preferably from 0.5 to 5 parts by mass based on 100 parts by mass of the polar group-modified olefin-based copolymer mentioned above. When the content of the above-mentioned metal ion and/or the metal compound is 0.1 part by mass or more, the crosslinking density of the obtained elastomer film is high, and an elastomer film having high mechanical strength and heat resistance can be obtained, being preferable. On the other hand, when the content of the above-mentioned metal ion and/or the metal compound is 20 parts by mass or less, the crosslinking density of the obtained elastomer film can be adjusted within an appropriate range and, a formation of a brittle film having an excessively high hardness because of excessively high crosslinking density can be suppressed, being preferable.

(3) Elastomer film

The elastomer film of the present invention has an excellent transparency since it has an elastomer layer comprising the polar group-modified olefin-based copolymer mentioned above and the above-mentioned metal ion and/or the metal compound for crosslinking the polar group-modified olefin-based copolymer mentioned above through the polar group in the polar group-modified olefin-based copolymer mentioned above. Specifically, the total transmittance

of the elastomer film of the present invention at a film thickness of 0.5 mm and at 25°C is 90% or more, preferably 91% or more and further preferably 92% or more. In addition, the elastomer film of the present invention has excellent transparency in a wide temperature range. Specifically, the elastomer film of the present invention can maintain the transparency (total transmittance at a film thickness of 0.5 mm is 90% or more, preferably 91% or more and further preferably 92% or more) at a temperature in the range from -100°C to 90°C, preferably from -50°C to 90°C and further preferably from -40°C to 90°C. The total transmittance mentioned above shows a value measured according to the method described in Examples.

Moreover, the thickness of the elastomer film of the present invention is particularly limited, and it can be in various ranges depending on requirements such as application. The thickness of the elastomer film of the present invention is usually in the range from 1 to 1,000 μm, preferably from 1 to 500 μm and further preferably from 1 to 100 μm.

The elastomer film of the present invention may optionally be blended with various kinds of additives including a lubricant, a stabilizer such as anti-aging agent, heat stabilizer, weather resistant agent, metal deactivator, UV-ray absorbing agent, light stabilizer and copper inhibitor, an antibacterial·antifungal agent, a dispersing agent, a plasticizer, a nucleating agent, a flame retardant, an adhesiveness imparting agent, a foaming aid, a coloring agent such as titanium oxide and carbon black, a filler, for example, composed of a metal powder such as ferrite, an inorganic fiber such as glass fiber and metal fiber, carbon fiber, an organic fiber such as alamide fiber, a composite fiber, an inorganic whisker such as potassium titanate whisker, glass beads, glass balloon, glass flake, asbestos, mica, calcium carbonate, talc, silica, calcium silicate, hydrotalcite, kaolin, diatomaceous earth, graphite, pumice stone, ebonite powder, cotton flock, cork powder, barium sulfate, fluororesin and polymer beads or mixtures of them, polyolefin wax, a filler composed of cellulose powder, rubber powder, wood powder and the like, a low molecular weight polymer and the like to use.

Other constitutions of the elastomer film of the present invention are not limited so long as it has the elastomer layer mentioned above. That is, the elastomer film of the present invention may consist of only one elastomer layer described above, or may be a multi-layered film having two or more elastomer layers of different types or properties. Further, the elastomer film of the present invention may have other film layer and/or a hard transparent plate layer on at least one exposed surface thereof. The above-mentioned other film layer and/or the hard transparent plate layer have only to be formed on at least one surface of the elastomer layer mentioned above. That is, they may be formed on one surface of the elastomer layer mentioned above or on both surfaces of the elastomer layer mentioned above. In addition, with respect to the transparency of the above-mentioned other film layer and/or the hard transparent plate layer, the total transmittance at 25°C as measured by the method described in Examples is preferably 80% or more, more preferably 85% or more, further preferably 90% or more and particularly preferably 91% or more. Further, the thickness of the above-mentioned other film layer and/or the hard transparent plate layer has no particular restriction. The thickness of the above-mentioned other film layer is usually 200 μm or less, preferably 150 μm or less, further preferably 100 μm or less and particularly preferably from 20 to 100 μm. Moreover, the thickness of the above-mentioned hard transparent plate layer is usually 1,000 μm or less, preferably 700 μm or less, further preferably 500 μm or less and particularly preferably from 200 to 500 μm.

The material, the shape and the structure of the above-mentioned other film layer have no particular restriction. The above-mentioned other film layer includes, for example, a polyester such as polyethylene terephthalate (PET) and polybutylene terephthalate (PBT), polyvinyl alcohol, triacetyl cellulose, polycarbonate, an acrylic-based resin such as poly methyl methacrylate, a fluororesin and the like. Additionally, the above-mentioned other film layer may consist of only one layer, or two or more layers. Further, in the case it consists of two or more layers, each of the above-mentioned other film layers may be of the same material or a different material.

The material, the form and the structure of a transparent resin constituting the transparent resin layer mentioned above are not particularly limited, either. The elastomer film of the present invention can be preferably used for a display panel of electrical or electronic equipment. Further, with regard to a display panel for a cellular telephone or the like in particular, a load may be applied to the display panel when a user is seated while the device is in the user's hip pocket, or the like, therefore it is preferred that the transparent resin mentioned above has a flexibility capable of resisting the applied load. In addition, the transparent resin mentioned above may be in the form of sheet or in the form of film. Further, the transparent resin mentioned above may have a monolayer structure or may have a multilayer structure of two or more layers, in which transparent resins of the same material or different materials are laminated. In addition, in the case where the transparent resin layer mentioned above is provided on both surfaces of the elastomer layer mentioned above, a transparent resin of the same material may be used for both surfaces, or transparent resins of different materials may be used for one surface and for the other surface, respectively.

Specific examples of the transparent resin constituting the transparent resin layer mentioned above include, for example, polycarbonate-based resin, acrylic-based resin such as polymethyl methacrylate, 1,2-polybutadiene resin, polyvinyl chloride resin, cyclic olefin copolymer, modified norbornene-based resin, norbornene-based resin, alicyclic acrylic resin, amorphous polyolefins such as polycyclohexylethylene, amorphous fluororesin, polystyrene-based resin, transparent ABS resin, polyethylene terephthalate, polyethylene naphthalate, amorphous copolyesters, polyarylate, polymethylpentene, polysulfone, polyethersulfone, polyetherimide, cellulose acetate, allyl diglycol carbonate resin, ethylene-vinyl acetate copolymer (EVA, generally containing 3% by mass or higher of vinyl acetate unit), polyolefin-based resin such as polyethylene and polypropylene, vinyl ester-based resin (excluding EVA), amorphous polyamide-based resin, urethane resin, epoxy resin, unsaturated polyester-based resin, silicon-based resin and the like. Among these, a resin such as polycarbonate resin and polyacrylic-based resin is preferred.

(4) Production process for elastomer film

The method for producing of the elastomer film of the present invention is characterized by preparing a mixed liquid by dissolving or dispersing a polar group-containing olefin-based copolymer and a metal compound in a solvent, coating the mixed liquid on a substrate, and removing the solvent to form an elastomer layer on the substrate.
In addition, the other method for producing of the elastomer film of the present invention is characterized by forming an elastomer layer by extrusion molding with a liquid comprising a polar group-containing olefin-based copolymer and a metal compound (for example, a metal compound-containing molten polymer).
The solvent for dissolving or dispersing the polar group-containing olefin-based copolymer mentioned above and the metal compound is not particularly restricted. Generally, an organic solvent capable of easily dissolving or dispersing the polar group-containing olefin-based copolymer mentioned above is used. The organic solvent includes, for example, an aliphatic hydrocarbon, a cycloaliphatic hydrocarbon, an aromatic hydrocarbon and halogenide thereof, and the like. Specific examples include butane, pentane, hexane, heptane, 2-butane, 2-methyl-2-butane, cyclopentane, methyl cyclopentane, cyclohexane, isooctane, benzene, toluene, xylene, chlorobenzene, dichloromethane, dichloroethane and the like.
In the method for producing of the elastomer film of the present invention, the polar group-containing olefin-based copolymer mentioned above and the metal compound are dissolved or dispersed in the solvent to prepare a mixed liquid. The metal compound mentioned above may be, as already described, an inorganic compound comprising a metal element or an organic compound. In the case of using the inorganic metal compound, the compound may be treated with a silane coupling agent or a higher fatty acid in order to enhance dispersibility in the polar group-containing olefin-based copolymer mentioned above. The metal compound may be used alone or in combination of two or more.
The amount of the metal compound mentioned above to be used is not particularly restricted and can optionally be in various ranges. It is usually in the range from 0.1 to 20 parts by mass, preferably from 0.2 to 15 parts by mass and further preferably from 0.5 to 5 parts by mass based on 100 parts by mass of the polar group-modified olefin-based copolymer mentioned above. When the amount of the metal compound mentioned above to be used is 0.1 part by mass or more, an elastomer film having higher crosslinking density can be obtained and mechanical strength and heat resistance of the film can be improved, being preferable. On the other hand, when the amount of the metal compound mentioned above to be used is 20 parts by mass or less, the crosslinking density of the obtained elastomer film can be adjusted within an appropriate range and, a formation of a brittle film having an excessively high hardness because of excessively high crosslinking density can be suppressed, being preferable.
Further, a metal salt of a carboxylic acid may be incorporated as an activating agent in addition to the metal compound mentioned above for the purpose of improving miscibility of the above-mentioned metal compound to the polar group-containing olefin-based copolymer mentioned above and heat resistance of the obtained elastomer film. The metal salt of the carboxylic acid mentioned above is preferably used a metal salt of monovalent carboxylic acid and it is more preferable that the carboxylic acid has carbon atoms of 3 to 23. Specific examples of such carboxylic acid include propionic acid, acrylic acid, butyric acid, methacrylic acid, valeric acid, hexanoic acid, octanoic acid, 2-ethylhexanoic acid, decanoic acid, palmitic acid, myristic acid, lauric acid, stearic acid, oleic acid, behenic acid, naphthenic acid, benzoic acid and the like. Moreover, a metal constituting the metal salt which is using as the above-mentioned activating agent can be selected from already exemplified metals, however, one which is the same as the metal constituting the metal compound mentioned above is preferably used. The amount of the metal salt mentioned above to be used as the activating agent is usually in the range from 0.3 to 20 parts by mass and preferably from 1 to 15 parts by mass based on 100 parts by mass of the polar group-containing olefin-based copolymer mentioned above. When the amount is 0.3 part by mass or more, the effect is provided sufficiently and when the amount is 20 parts by mass or less, the deterioration of mechanical strength of the obtained elastomer film can be suppressed, being preferable.
In a case where the solubility of the above-mentioned metal compound and the activating agent in the solvent mentioned above is low, a dispersion liquid in which the above-mentioned metal compound and the activating agent are dispersed in a suspended state in the solvent may be prepared. Alternatively, other solvent or additives may be incorporated for dissolving the above-mentioned metal compound and the activating agent.
Meanwhile, in the other method for producing of the elastomer film of the present invention, a liquid comprising the polar group-containing olefin-based copolymer mentioned above and the metal compound is used. The liquid comprising the polar group-containing olefin-based copolymer mentioned above and the metal compound may be a mixed liquid in which the polar group-containing olefin-based copolymer mentioned above and the metal compound are dissolved or dispersed in a solvent or be one in a state where the polar group-containing olefin-based copolymer mentioned

above and the metal compound are present in a liquid form without being dissolved or dispersed in a solvent such as a molten liquid (for example, a metal compound-containing molten polymer). As the solvent, the solvents already described specifically can be used. In addition, also into the above-mentioned liquid comprising the polar group-containing olefin-based copolymer mentioned above and the metal compound, a metal salt of a carboxylic acid can be added as an activating agent in addition to the metal compound in order to improve miscibility of the metal compound to the polar group-containing olefin-based copolymer mentioned above and heat resistance of the obtained elastomer film.

The method of mixing each of the ingredients may be various methods and includes a method of admixing each of the ingredients in a solvent respectively, a method of preparing a solution or a liquid dispersion for each of the ingredients and mixing them, a method of using a melting-kneading apparatus which is generally used and the like. When the polar group-containing olefin-based copolymer mentioned above and the metal compound are dissolved or dispersed in the solvent, the order of adding the polar group-containing olefin-based copolymer mentioned above and the metal compound is not particularly restricted. Any one of them may be added previously, or both of them may be added simultaneously, however, previous addition of the polar group-containing olefin-based copolymer and subsequent addition of the metal compound are preferred. That is, if the polar group-containing olefin-based copolymer is previously added to mix and disperse sufficiently and then the metal compound in this state is added, the metal compound can also be mixed and dispersed properly and the transparency of the obtained elastomer can be improved, being preferable. Further, mixing of each of the ingredients can be conducted with a solution-stirring apparatus which is generally used. Moreover, mixing condition is not particularly restricted and, for example, the temperature upon mixing is preferably 20°C or higher and more preferably 30°C or higher. In addition, an appropriate catalyst may also be incorporated in order to promote crosslinking by a metal ion or a metal compound.

In the method for producing of the elastomer film of the present invention, the mixed liquid mentioned above is coated on a substrate. The coating method is not particularly limited. As the method for coating, it can be coated, for example, by a roll coater, as well as by solvent casting method, spin coating method and the like. In addition, the type and the material of the substrate are not particularly restricted and substrates of various types and materials can be used optionally. The substrate mentioned above includes, for example, a polymer such as resin or a polymer film (polyethylene terephthalate (PET), polybutylene terephthalate (PBT), polyvinyl alcohol and the like), a steel belt; a substrate of an inorganic material such as ceramic and glass, and the like.

In the other method for producing of the elastomer film of the present invention, an elastomer layer is formed by extrusion molding with a liquid comprising a polar group-containing olefin-based copolymer and a metal compound. The extrusion molding method mentioned above may be a conventionally known method, and the way and the condition are not particularly limited. Specifically, molding can be conducted, for example, by a T-die extrusion method. That is, the polar group-containing olefin-based copolymer mentioned above and the metal compound are incorporated into a cylinder to mix, the mixture is transferred to a T-die and then extrusion method can be performed. In this case, the polar group-containing olefin-based copolymer mentioned above and the metal compound may be incorporated into the cylinder simultaneously or at different timings. Further, in the T-die extrusion method mentioned above, a solvent may or may not be contained in the liquid comprising the polar group-containing olefin-based copolymer mentioned above and the metal compound. In the case of containing a solvent in the liquid, it is preferred to conduct heating in the cylinder to distill off the solvent from a vent port.

In the method and the other method for producing of the elastomer film of the present invention, crosslinking can be formed in at least a portion of the polar group-containing olefin-based copolymer by applying electron beam irradiation or UV-ray irradiation onto the elastomer layer mentioned above or heating. Formation of the crosslinking can improve heat resistance of the elastomer film. In the case of applying an electron beam irradiation, crosslinking can be formed by irradiating an electron beam onto the obtained film with an electron beam irradiation apparatus. Further, in a case of applying an UV-ray irradiation, crosslinking can be formed by irradiating an UV-ray with an UV-ray irradiation apparatus onto a film obtained by mixing a photosensitizer optionally in addition to the polar group-modified olefin-based copolymer mentioned above and the above-mentioned metal ion and/or the metal compound. Moreover, in the case of forming crosslinking by heating, crosslinking can be usually formed by heating a film obtained by mixing a crosslinking agent such as an organic peroxide and, further, a crosslinking aid optionally in addition to the polar group-modified olefin-based copolymer mentioned above and the above-mentioned metal ion and/or the metal compound under an atmosphere where air is not present such as nitrogen atmosphere.

In the method and the other method for producing of the elastomer film of the present invention, in the case of using the polar group-containing olefin-based copolymer mentioned above and the metal compound in a state of dissolving or dispersing in a solvent, an elastomer layer can be formed by removing the solvent. The method of removing the solvent is not particularly limited and it can be removed by a well-known method, for example, heating, depressurization, steam distillation and the like.

In addition, when the elastomer film of the present invention having other film layer and/or a hard transparent plate layer is obtained, there is no particular restriction to the method of providing the above-mentioned other film layer and/or the hard transparent plate layer. According to the present method for producing of the elastomer film, the elastomer

film of the present invention having the above-mentioned other film layer and/or the hard transparent plate layer can be obtained by using the other film layer and/or the hard transparent plate layer as a substrate. Other process includes, for example, bonding by use of an adhesive (tackiness agent), direct-bonding by use of hot pressing or cold pressing (also including a case of joining by mere pressing) and the like. In addition, the process includes a casting method (solvent free casting method and solvent casting method), an extrusion method, a press-molding method, an injection molding method, a cast molding method and the like.

Specifically, the elastomer film of the present invention having the above-mentioned other film layer and/or the hard transparent plate layer can be obtained, for example, by laminating the above-mentioned other film layer and/or the hard transparent plate layer on one surface or both surfaces of the elastomer layer mentioned above and then optionally applying pressing. More specifically, the elastomer film of the present invention having the above-mentioned other film layer and/or the hard transparent plate layer can be obtained, for example, by means of supplying the above-mentioned other film layer and/or the hard transparent plate layer in a half cured state by heating to the surface of the elastomer layer mentioned above by extruding or using a doctor blade while transporting the elastomer layer, pressing to bond by a roller and the like and cooling. Further, the above-mentioned other film layer and/or the hard transparent plate layer can be disposed on one surface or both surfaces of the elastomer layer mentioned above by means of coating other film and/or a hard transparent plate rendered liquidous or semi-solidous state by heating, dissolving or dispersing in a solvent and the like by use of a roll coater, drying and the like.

[Examples]

Hereinafter, the present invention will be explained in detail by way of examples. The invention is not anyhow limited by these examples. Furthermore, "%" and "part" in examples are based on the mass unless otherwise specified.

(1) Production of elastomer film

As the polar group-modified olefin-based copolymer, a copolymer (A-1) having a monomer unit derived from ethylene in an amount of 86.3 % by mol, a monomer unit derived from propylene in an amount of 10.6 % by mol, a monomer unit derived from 5-ethylidene-2-norbornene in an amount of 2.6 % by mol, and a monomer unit derived from 8-methyl-8-carboxy-tetracyclo[4.4.0.$1^{2,5}$.$17^{,10}$]-3-dodecene in an amount of 0.5 % by mol, and having a weight average molecular weight (Mw) of $16.5 \times 10^4$ was used. Further, a tetra n-butoxyzirconium (manufactured by Wako Pure Chemical Industries, Ltd.) as the metal compound (B-1), tetra n-butoxytitanium (manufactured by Wako Pure Chemical Industries, Ltd.) as the metal compound (B-2), and tetra n-butoxyaluminum (manufactured by Tokyo Kasei Kogyo Co., Ltd.) as a metal compound (B-3) were used.

Under nitrogen atmosphere, 100 parts by mass of the copolymer (A-1) and 0.6 part by mass of the metal compound (B-1) were charged into a 10L double arm-type pressing kneader (manufactured by Moriyama Co., Ltd.) heated at 230°C, and kneaded at 40 rpm for 20 minutes (shear rate was 200 $s^{-1}$.). Then, the obtained molten lumpy kneaded product was pelletized by a feeder ruder (manufactured by Moriyama Co., Ltd.) set to 180°C and 40 rpm to obtain a pelleted elastomer material. Subsequently, the obtained pellet of the elastomer material was press-molded by an electrothermal press-molding machine (manufactured by Kansai Roll Co. Ltd.) under conditions at a molding temperature of 180°C, and for pressing-heating time of 10 minutes, and pressing-cooling time of 5 minutes to obtain an elastomer film of Example 1 having 0.3 mm thickness, 120 mm length and 120 mm width.

Additionally, an elastomer film of Examples 2 was obtained in the same manner as in Example 1 except for charging 100 parts by mass of the copolymer (A-1) and 0.5 part by mass of the metal compound (B-2) into the 10L double arm-type pressing kneader (manufactured by Moriyama Co., Ltd.) heated at 230°C, and kneading at 40 rpm for 20 minutes (shear rate was 200 $s^{-1}$.) under nitrogen atmosphere.

Further, an elastomer film of Example 3 was obtained in the same manner as in Example 1 except for charging 100 parts by mass of the copolymer (A-1) and 0.4 part by mass of the metal compound (B-3) into the 10L double arm-type pressing kneader (manufactured by Moriyama Co., Ltd.) heated at 230°C, and kneading at 40 rpm for 20 minutes (shear rate was 200 $s^{-1}$.) under nitrogen atmosphere.

On the other hand, an elastomer film of Comparative Example 1 was obtained in the same manner as in Example 1 except for not using the metal compound (B-1).

(3) Evaluation of physical property

Transparency, colorability, mechanical strength, heat resistance, and impact resistance for the elastomer films of Examples 1 to 3 and Comparative Example 1 obtained by the methods described above were measured by the following methods. The results are shown in Table 1.

[1] Transparency

Total transmittance (%) at 25°C for the elastomer films of Examples 1 to 3 and Comparative Example 1 obtained by the methods described above was measured by using model (haze-guard plus) manufactured by BYK-Gardner GmbH to evaluate transparency.

[2] Colorability

Colorability for the elastomer films of Examples 1 to 3 and Comparative Example 1 obtained by the methods described above was evaluated by examining dyeability of ultramarine blue described below. Namely, 70 g of each elastomer film of Examples 1 to 3 and Comparative Example 1 was wound around a roll, 0.5 g of ultramarine blue was added, subjected to tight milling with a nip of 0.3 mm 10 times, and then a sheet was formed with a nip of 2 mm and the state of dyeing was visually observed to examine dyeability.

[3] Mechanical strength

Tensile strength at breaking $T_s$ (MPa) and tensile elongation at breaking $E_s$ (%) for the elastomer films of Examples 1 to 3 and Comparative Example 1 obtained by the methods described above were measured according to JIS-K6351 to evaluate.

[4] Heat resistance

Storage shear moduli $G'_{30°C}$ and $G'_{70°C}$ (dyn/$cm^2$) for the elastomer film of Examples 1 to 3 and Comparative Example 1 obtained by the methods described above were measured by using dynamic viscoelastic measurement apparatus ("MR-500" manufactured by Rheology Co.). And, heat resistance was evaluated by calculating a changing quantity [log ($G'_{30°C}$ /$G'_{70°C}$)] of G's at 30°C and 70°C, based on $G'_{30°C}$ (storage shear modulus in the dynamic viscoelastic measurement at 30°C and 1 Hz) and $G'_{70°C}$ (storage shear modulus in the dynamic viscoelastic measurement at 70°C and 1 Hz). In this case, if the changing quantity of G's at 30°C and 70°C is closer to 0, it shows better heat resistance is more satisfactory.

[5] Impact resistance

Impact resistance was evaluated by the method of Tests 1 and 2 described below.

(A) Test 1

As shown in Fig.1, a silicon rubber thin plate 61 (5.15 mm in thickness) was placed on a base platform 62 made of marble or the like, and a base layer 2 (trade name "Corning 1737" manufactured by Corning Incorporated), which is melt-molded aluminosilicate thin plate glass having a thickness of 0.7 mm, was placed thereon. Then, each elastomer film 1 of Examples 1 to 3 and Comparative Example 1 obtained by the methods described above was placed on the base layer 2. Further, an acrylic plate 3 having a thickness of 0.5 mm (trade name "Clarex" manufactured by Nitto Jushi Kogyo Co., Ltd.) was placed on the transparent sheet 1. Then, a golf ball 7 (42.7 mm in diameter, 45.8 g in mass) was subjected to free-fall drops onto the elastomer film of Examples 1 to 3 and Comparative Example 1 obtained by the methods described above from a predetermined height and collision. Thereafter, it was confirmed by visual observation if the base layer 2 was cracked or broken. Then, the height in which the base layer 2 was damaged was obtained as a falling ball height (m) and impact resistance was evaluated by calculating impact fracture energy (J) with this falling ball height according to the following formula.

$$\text{Impact fracture energy (J)} = A \times B \times 9.8$$

A; Falling ball height (m)
B; Weight of golf ball (kg)

(B) Test 2

As shown in Fig. 2, an iron plate 60 (SUS 304) having a thickness of 2 mm was placed on a base platform 62

made of marble or the like. An acrylic plate 4 having a thickness of 1.0 mm (trade name of "Clarex" manufactured by Nitto Jushi Kogyo Co., Ltd.) was placed on the iron plate 60 and, further, a base layer 2 (trade name "Corning 1737" manufactured by Corning Incorporated), which is melt-molded aluminosilicate thin plate glass having a thickness of 0.7 mm, was placed thereon. Then, each of the elastomer films 1 of Examples 1 to 3 or Comparative Example 1 and an acrylic plate 3 having a thickness of 0.5 mm were placed on the base layer 2. Subsequently, a steel ball 8 (50.8 mm in diameter, 550 g in mass) was subjected to free-fall drops onto the elastomer film of Examples 1 to 3 and Comparative Example 1 obtained by the methods described above from a predetermined height and collision. Thereafter, it was confirmed by visual observation if the base layer 2 was cracked or broken. Then, the height in which the base layer 2 was damaged was obtained as a falling ball height (m) and impact resistance was evaluated by calculating impact fracture energy (J) with this falling ball height according to the following formula.

$$\text{Impact fracture energy (J)} = A \times B \times 9.8$$

A; Falling ball height (m)
B; Weight of steel ball (kg)
Table 1

| | Example 1 | Example 2 | Example 3 | Comparative Example 1 |
|---|---|---|---|---|
| Film thickness (mm) | 0.3 | 0.3 | 0.3 | 0.3 |
| Total transmittance (%) | 95 | 94 | 94 | 94 |
| Colorability | good | good | good | good |
| $T_B$ (MPa) | 18.0 | 16.0 | 19.5 | 14.5 |
| $E_B$ (%) | 810 | 750 | 660 | 1,200 |
| $G'_{30°C}$ (dyn/cm$^2$) | 1,240,000 | 1,364,000 | 1,116,000 | 496,000 |
| $G'_{70°C}$ (dyn/cm$^2$) | 429,000 | 431,000 | 434,000 | 7,000 |
| Log ($G'_{30°C}$ /$G'_{70°C}$) | 0.46 | 0.50 | 0.41 | 1.85 |
| Impact fracture energy (J) (Test 1) | 1.3 | 1.4 | 1.1 | 0.7 |
| Impact fracture energy (J) (Test 2) | 3.2 | 3.3 | 3.0 | 2.1 |

As apparent from the result of Table 1, it can be seen that the elastomer films in Examples 1 to 3 were excellent in all of transparency, colorability, mechanical strength, heat resistance and impact resistance. On the contrary, it can be seen that the elastomer film of Comparative Example 1 having no crosslinking by a metal through a polar group in the polar group-modified olefin-based copolymer showed similar level in transparency and colorability comparable with the elastomer films in Examples 1 to 3, and heat resistance, impact resistance and mechanical property thereof were inferior to the elastomer films in Examples 1 to 3.

(4) Evaluation for physical property of elastomer film obtained by other method

Under nitrogen atmosphere, 100 parts by mass of the copolymer (A-1) and 1.0 part by mass of the metal compound (B-1) were charged into a 10L double arm-type pressing kneader (manufactured by Moriyama Co., Ltd.) heated at 230°C, and kneaded at 40 rpm for 20 minutes (shear rate was 200 $s^{-1}$.). Then, the obtained molten lumpy kneaded product was pelletized by a feeder ruder (manufactured by Moriyama Co., Ltd.) set to 180°C and 40 rpm to obtain a pelleted elastomer material. Subsequently, the obtained pellet of the elastomer material was extruded by an extruder equipped with a 500 mm T-die (model "MG427" manufactured by Hattori Gear Producing Co., in which a screw is a single shaft uni-melt screw and ratio L/D of length L for flight portion of the screw to diameter D of the screw, was 26, having thickness of the T-die lip of 0.5 mm), under conditions at a temperature inside the cylinder of 210°C and a number of revolution of the screw of 30 rpm, to obtain an elastomer film of Example 4 having 0.05 mm thickness and 500 mm width.
Further, 100 g of the copolymer (A-1) and 1,900 g of dehydrated toluene were charged into a 2 L two-necked flask substituted with nitrogen, and dissolved at 80°C. 0.6 g of a 85% butanol solution of the metal compound (B-1) was

added to this solution and stirred at 80°C for one hour to prepare a mixed solution. Then, the obtained mixed solution was casted on a polyester film and, dried in air for 24 hours, and further dried for 4 hours at 80°C in vacuum. After that, a film formed on the polyester film was peeled to obtain an elastomer film of Example 5 having 100 μm thickness.

Moreover, the mixed solution prepared in Example 5 mentioned above was coated on a polyester film by using a coater ("M-200" manufactured by Hirano Techseed Co.) with a clearance of 2 mm of comma direct and dried at a drying temperature of 100°C to obtain an elastomer film of Example 6 having 100 μm thickness. Further, after the coating mentioned above, an electron beam irradiation was conducted under conditions at 200 kV and 100 kGy with an electron beam irradiation apparatus ("EBC360-60", manufactured by Nisshin Hibondage Co.) and then dried at a drying temperature of 100°C to obtain an elastomer film of Example 7 having 100 μm thickness.

Transparency, colorability, mechanical strength, heat resistance and impact resistance for each of the elastomer films in Examples 4 to 7 were measured by the same method as in Examples 1 to 3 mentioned above. The results are shown in Table 2.

Table 2

| | Example 4 | Example 5 | Example 6 | Example 7 |
|---|---|---|---|---|
| Film thickness (mm) | 0.05 | 0.1 | 0.1 | 0.1 |
| Total transmittance (%) | 93 | 96 | 95 | 95 |
| Colorability | good | good | good | good |
| $T_B$ (MPa) | 19.0 | 23.0 | 20.1 | 33.2 |
| $E_B$ (%) | 750 | 700 | 670 | 520 |
| $G'_{30°C}$ (dyn/cm$^2$) | 1,302,000 | 1,300,000 | 1,200,000 | 1,400,000 |
| $G'_{70°C}$ (dyn/cm$^2$) | 431,000 | 430,000 | 425,000 | 432,600 |
| Log ($G'_{30°C}$ /$G'_{70°C}$) | 0.48 | 0.48 | 0.45 | 0.51 |
| Impact fracture energy (J) (Test-1) | 0.25 | 0.41 | 0.43 | 0.56 |
| Impact fracture energy (J) (Test-2) | 1.2 | 1.7 | 1.6 | 1.9 |

In the present invention, the Examples described above are not restrictive but examples can be modified variously within the scope of the invention in accordance with the purpose and application use.

[Industrial Applicability]

The elastomer film of the present invention is excellent in transparency, impact resistance, heat resistance and colorability compared with a conventional film. Accordingly, it can be utilized in a field in which transparency, impact resistance, heat resistance and colorability are required, and an image protective film such as a roll for information equipment, a cleaning blade, a film for electronic part, a sealing material and a photo, a decorative film for building material, a part for medical equipment, an electric wire, a general fabricated product such as convenience goods and sports goods are widely used. In addition, the elastomer film of the present invention can be used suitably in a display for a cellular telephone, a personal digital assistant, a display for a desktop-type computer, a laptop computer or an in-vehicle computer; a display panel for a touchscreen, a TV and a watch, and the like.

## Claims

1. An elastomer film **characterized in** having an elastomer layer consisting of a polar group-modified olefin-based copolymer, and a metal ion and/or a metal compound.

2. The elastomer film according to Claim 1, wherein the polar group contained in said polar group-modified olefin-based copolymer is at least one group selected from the group consisting of carboxyl group and derivatives thereof, hydroxyl group, epoxy group, amino group, alkoxysilyl group, sulfonic acid group and nitrile group.

3. The elastomer film according to Claim 1,

wherein said polar group-modified olefin-based copolymer is at least one polymer selected from the group consisting of a polar group-modified ethylene•α-olefin-based copolymer and a polar group-modified ethylene•α-olefin•non-conjugated diene copolymer.

**4.** The elastomer film according to Claim 1, wherein said polar group-modified olefin-based copolymer is a copolymer obtained by copolymerizing one type or two or more olefin-based monomers, and one type or two or more unsaturated monomers having a polar group, and wherein the ratio of a unit of said unsaturated monomer having a polar group is from 0.01 to 5 % by mol based on 100 % by mol of monomer units in said polar group-modified olefin-based copolymer.

**5.** The elastomer film according to Claim 4, wherein said unsaturated monomer having a functional group is a compound represented by the following general formula (1):

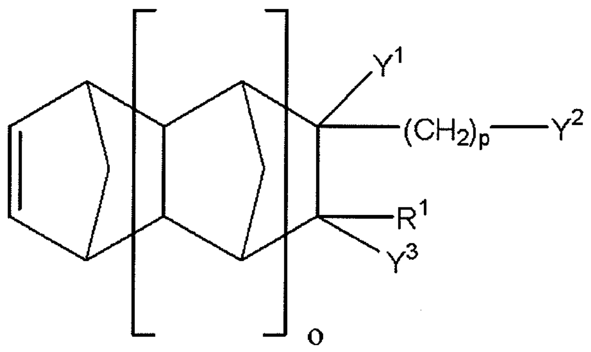

(1)

[in the general formula (1), $R^1$ represents a hydrogen atom or a hydrocarbon group of 1 to 10 carbon atoms; each of $Y^1$, $Y^2$ and $Y^3$ represents independently a hydrogen atom, a hydrocarbon group of 1 to 10 carbon atoms or a carboxyl group; at least one of $Y^1$, $Y^2$ and $Y^3$ is carboxyl group and, in a case where two or more of $Y^1$, $Y^2$ and $Y^3$ are carboxyl groups, they may be an acid anhydride formed by linkage with one another, o represents an integer from 0 to 2 and p represents an integer from 0 to 5.].

**6.** The elastomer film according to Claim 1, wherein said polar group-modified olefin-based copolymer does not have a crosslinking formed by electron beam irradiation, UV-ray irradiation, and a crosslinking agent.

**7.** The elastomer film according to Claim 1, wherein at least a portion of said polar group-modified olefin-based copolymer has a crosslinking formed by electron beam irradiation, UV-ray irradiation and a crosslinking agent.

**8.** The elastomer film according to Claim 1, wherein said metal ion and/or said metal compound is at least one ion and/or compound of a metal selected from the group consisting of zirconium, titanium, aluminum, magnesium, barium, zinc, iron, calcium, potassium, sodium and lead.

**9.** The elastomer film according to Claim 1, wherein said metal compound is an organic compound comprising a metal element.

**10.** The elastomer film according to Claim 1, wherein the total transmittance of said elastomer layer is 90% or higher at a temperature of 25°C and at a thickness of 0.5 mm.

**11.** The elastomer film according to Claim 1, wherein other film layer and/or a hard transparent plate layer is present on at least one surface of said elastomer layer.

**12.** A method of producing an elastomer film **characterized in** comprising:

preparing a mixed liquid by dissolving or dispersing a polar group-containing olefin-based copolymer and a metal compound in a solvent,
coating said mixed liquid on a substrate, and
removing said solvent to form an elastomer layer on said substrate.

**13.** The method of producing an elastomer film according to Claim 12, comprising applying electron beam irradiation or UV-ray irradiation onto said elastomer layer, or heating said elastomer layer to form crosslinking in at least a portion of said polar group-containing olefin-based copolymer.

**14.** A method of producing an elastomer film **characterized in** forming an elastomer layer by extrusion molding with a liquid comprising a polar group-containing olefin-based copolymer and a metal compound.

**15.** The method of producing an elastomer film according to Claim 14, comprising disposing said elastomer layer on a substrate.

**16.** The method of producing an elastomer film according to Claim 14, comprising applying electron beam irradiation or UV-ray irradiation onto said elastomer layer, or heating said elastomer layer to form crosslinking in at least a portion of said polar group-containing olefin-based copolymer.

Fig.1

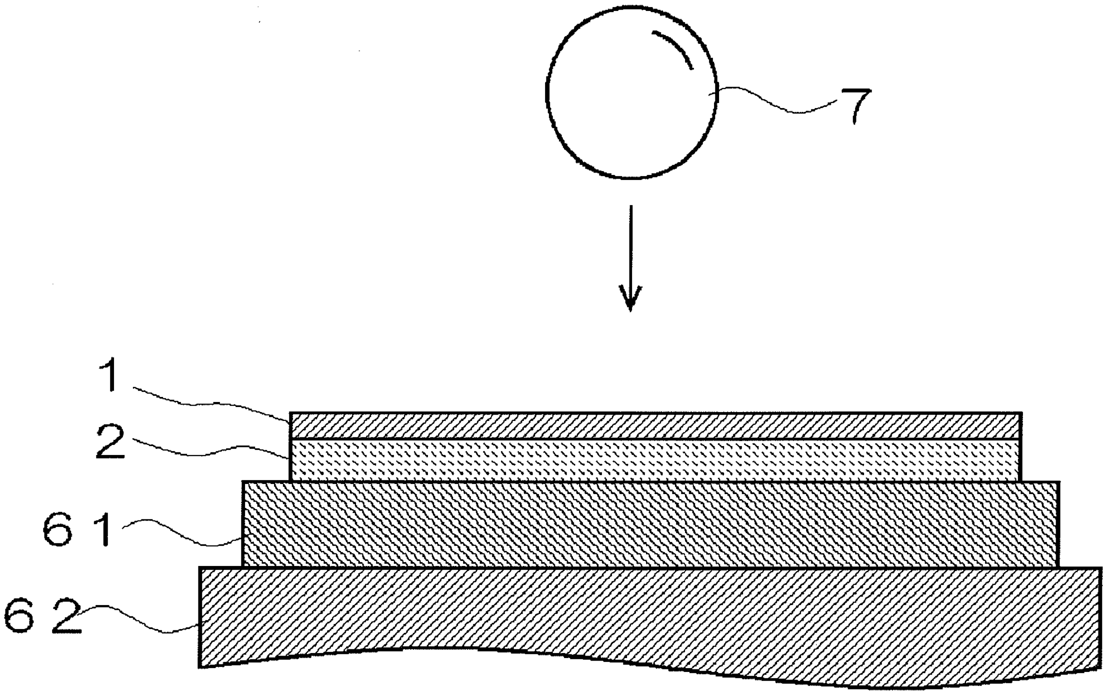


Fig.2

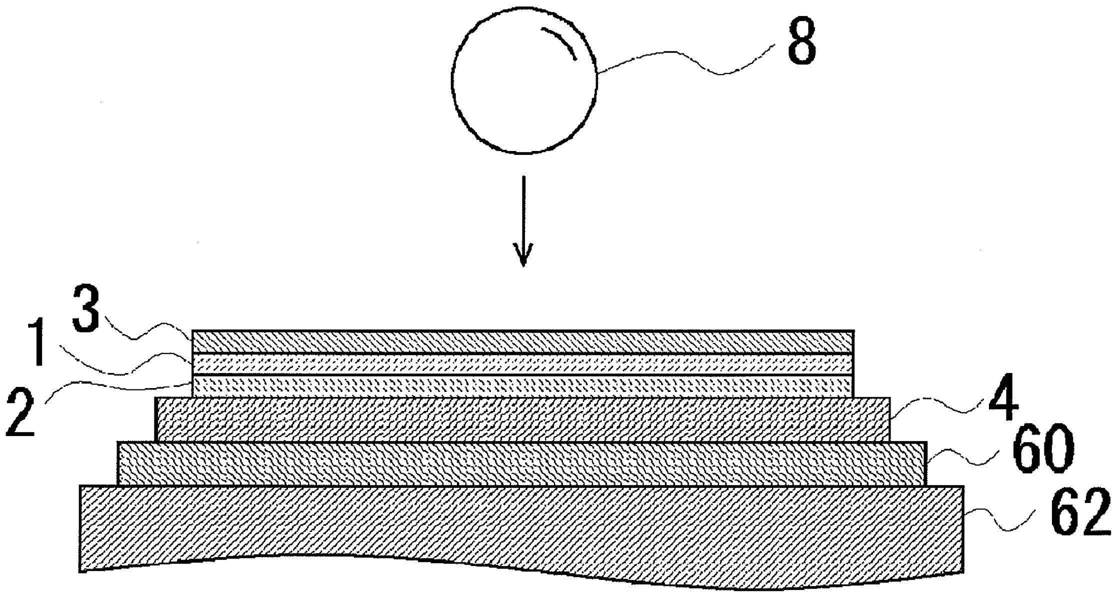

**INTERNATIONAL SEARCH REPORT**

International application No.
PCT/JP2004/014750

A. CLASSIFICATION OF SUBJECT MATTER
Int.Cl[7] C08L23/16, C08K13/02, C08J5/18, B32B25/08

According to International Patent Classification (IPC) or to both national classification and IPC

B. FIELDS SEARCHED

Minimum documentation searched (classification system followed by classification symbols)
Int.Cl[7] C08L1/00-101/14

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2003/002657 A1 (JSR Corp.), 09 January, 2003 (09.01.03), Claims; page 9, 3rd line from the bottom to page 11, line 4; page 18, lines 3 to 7; examples; page 28, lines 1 to 12<br>& AU 2002315707 A1 & BR 200205729 A<br>& CN 1464895 A & EP 1454952 A1<br>& JP 2003-82023 A & KR 2004014970 A<br>& US 2003/158347 A1 | 1-16 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 November, 2004 (01.11.04) | 16 November, 2004 (16.11.04) |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/014750

C (Continuation). DOCUMENTS CONSIDERED TO BE RELEVANT

| Category* | Citation of document, with indication, where appropriate, of the relevant passages | Relevant to claim No. |
|---|---|---|
| X | JP 3-501034 A (THE LUBRIZOL CORP.), 07 March, 1991 (07.03.91), Claims; page 7, lower left column, lines 1 to 12 & AU 8939892 A & BR 8907072 A & CN 1040603 A & DE 68913954 A & DK 9001075 A & EP 386192 A1 & ES 2018391 A & FI 9002177 A & IL 91455 A & NO 9001896 A & ZA 8906727 A | 1-4,6-10,12, 13 |
| Y | JP 7-501284 A (Michelin Recherche et Technique S.A.), 09 February, 1995 (09.02.95), Claims & CA 2116135 A & KR 275305 B & US 5295525 A | 1-16 |
| Y | JP 58-38735 A (Toyo Tire and Rubber Co., Ltd.), 07 March, 1983 (07.03.83), Claims; page 2, upper right column, lines 3 to 12 (Family: none) | 1-16 |
| P,X | JP 2004-35822 A (The Yokohama Rubber Co., Ltd.), 05 February, 2004 (05.02.04), Claims; Par. Nos. [0001], [0017] to [0018], [0024], [0069], [0076] & DE 10330291 A1 & US 2004/010090 A1 | 1-4,6-10 |

Form PCT/ISA/210 (continuation of second sheet) (January 2004)

**INTERNATIONAL SEARCH REPORT**

International application No.
PCT/JP2004/014750

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

This international application includes the following three inventions:
1. claims 1-11
2. claims 12 and 13, and
3. claims 14-16

Although the matter common to these three groups of inventions is an elastomer film made from an olefin copolymer having polar groups and a metal compound, such films are disclosed in WO 2003/002657 A1, lacking novelty.

Thus, there is no technical relationship among the three groups of inventions involving one or more of the same or corresponding special technical features.

1. ☐ As all required additional search fees were timely paid by the applicant, this international search report covers all searchable claims.
2. ☒ As all searchable claims could be searched without effort justifying an additional fee, this Authority did not invite payment of any additional fee.
3. ☐ As only some of the required additional search fees were timely paid by the applicant, this international search report covers only those claims for which fees were paid, specifically claims Nos.:
4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest.
☐ No protest accompanied the payment of additional search fees.

Form PCT/ISA/210 (continuation of first sheet (2)) (January 2004)